# EUROPEAN PATENT APPLICATION

(11) **EP 3 640 877 A1**
(43) Date of publication of application: **22.04.2020**
(21) Application number: 19187010.4
(22) Date of filing: 18.07.2019
(51) Int. Cl.: G06Q 20/20, G06Q 20/32

(54) **SALES DATA PROCESSING APPARATUS**

(30) Priority: 16.10.2018 JP 2018195010
(71) Applicant: Toshiba Tec Kabushiki Kaisha, 141-8562 Tokyo (JP)
(72) Inventor: OGAWA, Yuichi, Shinagawa-ku, Tokyo 141-8562 (JP)
(74) Representative: Bandpay & Greuter

(57) **Abstract**

A sales data processing apparatus comprises a receiving module configured to receive customer information including a request of a customer from a portable terminal, carried by the customer, in which the request of the customer is stored, and an output module configured to output contents of the request of the customer included in the customer information received by the receiving module.

## Description

### FIELD

Embodiments described herein relate generally to a sales data processing apparatus.

### BACKGROUND

In a related art, an electronic receipt system is known. In such receipt system, an electronic receipt is transmitted to a portable terminal carried by a customer, instead of a paper receipt when settlement of a transaction is completed. However, if the customer does not request issuance of the electronic receipt, the paper receipt is issued from the POS (Point Of Sales) terminal. Because, it is difficult to determine at the POS terminal side whether or not the customer is a member of the electronic receipt system.

At the time of issuing such an electronic receipt, a store clerk needs to input a request of the customer (issuance of the electronic receipt) to the POS terminal each time. However, it is troublesome for the store clerk to input the request of the customer each time.

### SUMMARY OF INVENTION

To solve such problem, there is provided a sales data processing apparatus, comprising: a receiving module configured to receive customer information including a request of a customer from a portable terminal, carried by the customer, in which the request of the customer is stored; and an output module configured to output contents indicated by the request of the customer included in the customer information received by the receiving module.

Preferably, the receiving module is configured to receive the customer information in which the request of the customer is set in association with a store code for identifying a retail store, and the output module is configured to output contents of the request of the customer associated with the store code of the retail store in which the sales data processing apparatus is installed.

Preferably still, the receiving module is configured to receive the customer information including the request of the customer and a realization condition for the request, and the output module is configured to output contents of the request if the realization condition included in the customer information received by the receiving module is satisfied.

Preferably yet, the receiving module is configured to receive the customer information in which an amount needed if a shopping bag is required is set as the realization condition, and the output module is configured to perform control to display whether or not the shopping bag is required depending on whether the amount needed if a shopping bag is required in a retail store satisfies the realization condition.

Suitably, the receiving module is configured to receive the customer information in which a point value given corresponding to a shopping is set as the realization condition, and the output module is configured to issue a paper receipt instead of an electronic receipt by switching from the electronic receipt to the paper receipt depending on whether an accumulated value of the point satisfies the realization condition.

The invention also relates to a method for outputting a request of a customer by a sales data processing apparatus, comprising: receiving customer information including the request of the customer from a portable terminal, carried by the customer, in which the request of the customer is stored; and outputting contents of the request of the customer included in the customer information received.

Preferably, the method further comprises: receiving the customer information in which the request of the customer is set in association with a store code for identifying a retail store, and outputting contents of the request of the customer associated with the store code of the retail store in which the sales data processing apparatus is installed.

Preferably still, the method further comprises: receiving the customer information including the request of the customer and a realization condition for the request, and outputting contents of the request if the realization condition included in the customer information received by the receiving module is satisfied.

Preferably yet, the method further comprises: receiving the customer information in which an amount needed if a shopping bag is required is set as the realization condition, and performing control to display whether or not the shopping bag is required depending on whether the amount needed if a shopping bag is required in a retail store satisfies the realization condition.

Suitably, the method further comprises: receiving the customer information in which a point value given corresponding to a shopping is set as the realization condition, and issuing a paper receipt instead of an electronic receipt by switching from the electronic receipt to the paper receipt depending on whether an accumulated value of the point satisfies the realization condition.

The invention also concerns a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a diagram illustrating a customer request system according to an embodiment;
Fig. 2 is a block diagram illustrating a hardware structure of a customer terminal;
Fig. 3 is a diagram illustrating a data structure of customer information;
Fig. 4 is a block diagram illustrating a hardware structure of a POS terminal;
Fig. 5 is a block diagram illustrating characteristic functional components of various devices included in the customer request system; and
Fig. 6 is a flowchart depicting a request handling processing performed by the POS terminal.

### DETAILED DESCRIPTION

In accordance with an embodiment, a sales data processing apparatus comprises a receiving module configured to receive customer information including a request of a customer from a portable terminal, carried by the customer, in which the request of the customer is stored; and an output module configured to output content of the request of the customer included in the customer information received by the receiving module.

Hereinafter, an embodiment of a sales data processing apparatus is described in detail with reference to the accompanying drawings. The sales data processing apparatus of the present embodiment is applied to a POS (Point Of Sales) terminal installed in a retail store.

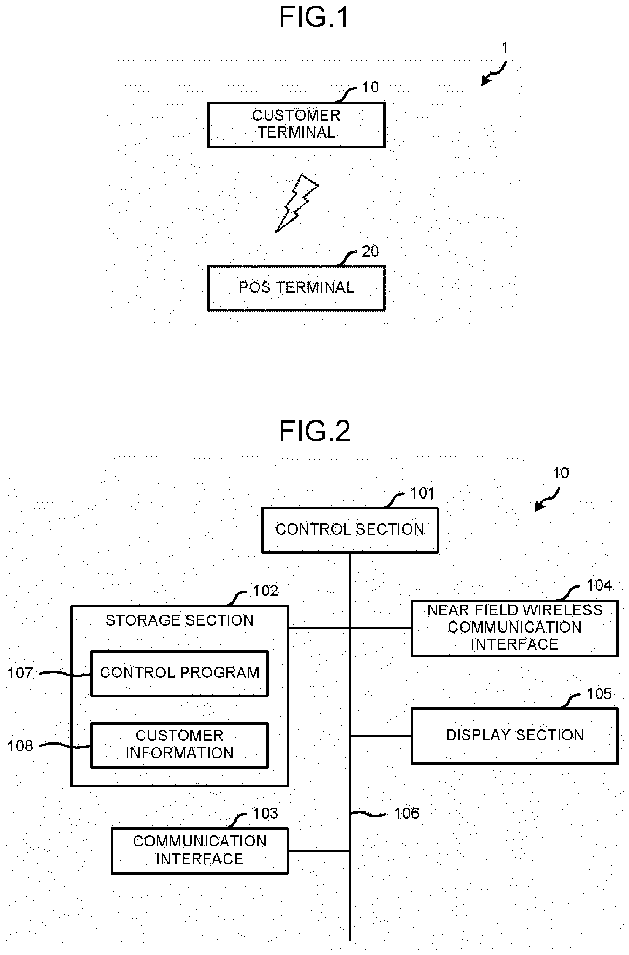

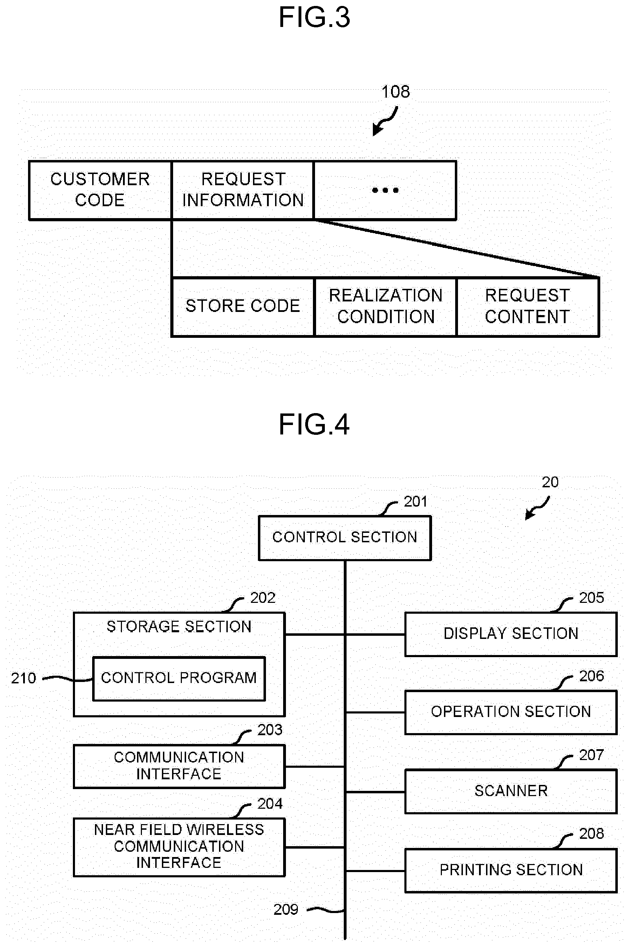

Fig. 1 is a diagram illustrating a customer request system 1 according to the present embodiment. The customer request system 1 includes a customer terminal 10 for inputting a request of a customer, and a POS terminal 20 for receiving customer information 108 (refer to Fig. 3) containing the request of the customer from the customer terminal 10 via near field wireless communication.

The customer terminal 10 is a portable terminal such as a smartphone, a tablet terminal or a wearable terminal carried by a customer. The customer terminal 10 receives an operation for setting a request of the customer such as whether a receipt is needed or whether a shopping bag is needed. The customer terminal 10 stores the request of the customer who carries the customer terminal 10. Then, when the customer terminal 10 is held over the POS terminal 20, the customer terminal 10 transmits the customer information 108 containing the request of the customer to the POS terminal 20 via the near field wireless communication.

The POS terminal 20 is a sales data processing apparatus which performs a commodity registration processing for registering a commodity to be purchased and a checkout processing on the commodity registered by the commodity registration processing. When the POS terminal 20 receives the customer information 108 from the customer terminal 10, the POS terminal 20 performs a processing according to the customer information 108.

Next, the hardware structures of various devices included in the customer request system 1 are described.

Fig. 2 is a block diagram illustrating the hardware structure of the customer terminal 10. The customer terminal 10 includes a control section 101, a storage section 102, a communication interface 103, a near field wireless communication interface 104 and a display section 105. These sections are mutually connected via a system bus 106 such as a data bus and an address bus.

The control section 101 is a computer that controls the entire operation of the customer terminal 10 to perform various functions of the customer terminal 10. The control section 101 includes a CPU (Central Processing Unit), a ROM (Read Only Memory), and a RAM (Random Access Memory). The CPU collectively controls the operation of the customer terminal 10. The ROM stores various programs and various kinds of data. The RAM temporarily stores various programs and various kinds of data. The CPU executes a program stored in the ROM or the storage section 102 on the RAM as a work area.

The storage section 102 is a memory device such as a flash memory. The storage section 102 stores a control program 107 and the customer information 108.

The control program 107 is an operating system or a program for performing functions provided by the customer terminal 10. The control program 107 includes a program for performing characteristic functions according to the present embodiment.

Fig. 3 is a diagram illustrating a data structure of the customer information 108. The customer information 108 includes various contents of the request by the customer for each retail store. The customer information 108 includes a customer code and one or a plurality of request information. The customer code is capable of identifying the customer. The request information indicates the request of the customer for each retail store. A store code, a realization condition and a request content are associated with the request information. The store code is capable of identifying the retail store. Specifically, the store code is used to identify a store to which corresponding request information is transmitted. The realization condition indicates a condition for realizing the request of the customer. The request content indicates request of the customer for the corresponding store.

For example, an amount needed if the customer wants a shopping bag is set in the realization condition, and a notification in which the shopping bag is not needed is set in the request content. The shopping bag is, for example, a polyethylene bag handed to a customer from the retail store to put a purchased commodity therein. In this case, the POS terminal 20 displays a message indicating that the shopping bag is not needed if the amount needed if the customer wants the shopping bag is equal to or smaller than a threshold value.

For example, in the realization condition, the number of purchased commodities is set, and in the request content, a notification in which the shopping bag is not needed is set. In this case, the POS terminal 20 displays that the shopping bag is not needed if the number of purchased commodities is equal to or greater than a threshold value.

For example, in the realization condition, a point value given corresponding to the shopping is set, and in the request content, a notification in which a paper receipt is issued instead of the electronic receipt is set. In this case, the POS terminal 20 issues a paper receipt instead of the electronic receipt if the point value given corresponding to the shopping is equal to or greater than a threshold value.

For example, necessity of an official receipt is set in the realization condition, and a name of a receiver, e.g., personal name or company name, is set in the request content. In this case, the POS terminal 20 issues an official receipt having the name of the receiver set in the request content if the request for official receipt is set in the realization condition.

No condition may be set in the realization condition. In this case, the POS terminal 20 outputs the request content without determining whether or not the realization condition is satisfied.

The communication interface 103 is used for establishing communication with other devices via a network.

The near field wireless communication interface 104 is used for establishing communication with an object within a few centimeters. For example, the near field wireless communication interface 104 transmits the customer information 108 when the customer terminal 10 is held over the POS terminal 20.

The display section 105 is, for example, a touch panel display in which a touch panel is laminated on a display surface. The display section 105 detects a touched position on the touch panel to determine that an operation corresponding to a display element shown on the touch panel of the display section 105 is input.

Fig. 4 is a block diagram illustrating a hardware structure of the POS terminal 20. The POS terminal 20 includes a control section 201, a storage section 202, a communication interface 203, a near field wireless communication interface 204, a display section 205, an operation section 206, a scanner 207 and a printing section 208. These sections are mutually connected via a system bus 209 such as a data bus and an address bus.

The control section 201 is a computer that controls the entire operation of the POS terminal 20 to perform various functions of the POS terminal 20. The control section 201 includes a CPU, a ROM and a RAM. The CPU collectively controls the operation of the POS terminal 20. The ROM stores various programs and various kinds of data.

The RAM temporarily stores various programs and various kinds of data. Then, the CPU executes a program stored in the ROM or the storage section 202 on the RAM as a work area.

The storage section 202 is a memory device such as an HDD (Hard Disk Drive) or an SSD (Solid State Drive). The storage section 202 stores a control program 210.

The control program 210 is an operating system or a program for performing functions provided by the POS terminal 20. The control program 210 includes a program for performing characteristic functions according to the present embodiment.

The communication interface 203 is used for establishing communication with other devices via a network.

The near field wireless communication interface 204 is used for establishing communication with an object within a few centimeters. For example, the near field wireless communication interface 204 receives the customer information 108 when the customer terminal 10 is held over the POS terminal 20.

The display section 205 is, for example, a touch panel display in which a touch panel is laminated on a display surface. The display section 205 detects a touched position on the touch panel to determine that an operation corresponding to a display element shown on the touch panel of the display section 205 is input.

The operation section 206 is an input device for receiving various operations, such as a keyboard.

The scanner 207 scans a code symbol such as a barcode and a two-dimensional code.

The printing section 208 is a printer that issues a receipt on which various kinds of information relating to one transaction and other information such as a transaction date and time and contact information are printed.

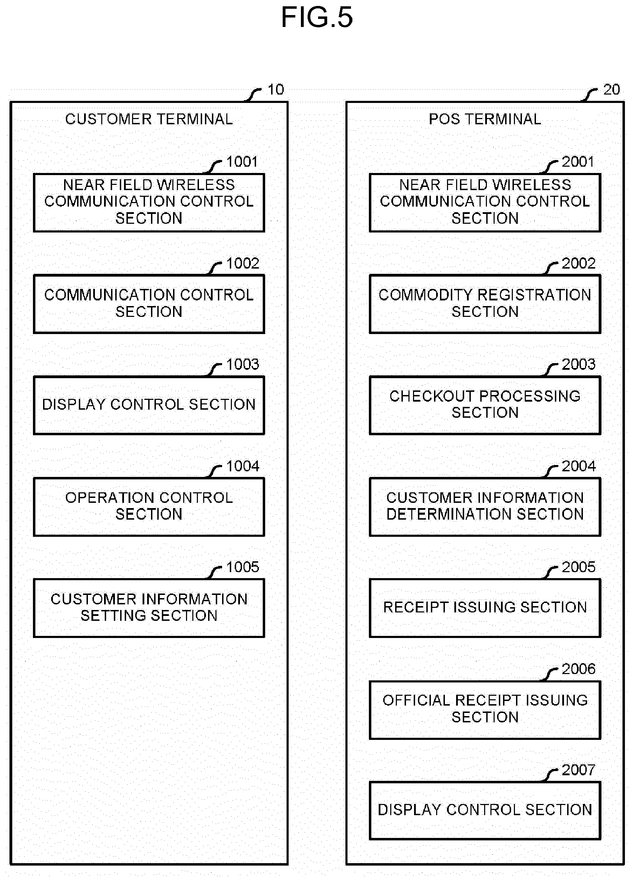

Next, the characteristic functions of various devices included in the customer request system 1 are described. Fig. 5 is a block diagram illustrating characteristic functional components of various devices included in the customer request system 1.

The control section 101 of the customer terminal 10 copies or decompresses the control program 107 in the storage section 102 on the RAM and operates according to the control program 107 to generate functional components shown in Fig. 5 on the RAM. Specifically, the control section 101 of the customer terminal 10 includes a near field wireless communication control section 1001, a communication control section 1002, a display control section 1003, an operation control section 1004, and a customer information setting section 1005.

The near field wireless communication control section 1001 controls the near field wireless communication interface 104 to perform the near field wireless communication. For example, the near field wireless communication control section 1001 controls the near field wireless communication interface 104 to transmit the customer information 108.

The communication control section 1002 controls the communication interface 103 to execute communication with an information processing apparatus or the like (not shown). For example, the communication control section 1002 receives the customer information 108 or information for changing (adding or deleting) the customer information 108.

The display control section 1003 controls the display section 105 to display various screens. For example, the display control section 1003 displays an input screen for inputting various contents of the customer information 108 on the display section 105.

The operation control section 1004 controls the touch panel of the display section 105 to receive various operations. For example, the operation control section 1004 receives an operation for setting various contents of the customer information 108 through the input screen described above.

The customer information setting section 1005 sets contents received by the operation control section 1004 through the input screen as the customer information 108. In other words, the customer information setting section 1005 stores the customer information 108 in the storage section 102.

When the communication control section 1002 receives the customer information 108, the customer information setting section 1005 stores the received customer information 108 in the storage section 102 as described above. Further, when the communication control section 1002 receives information for changing the customer information 108, the customer information setting section 1005 changes setting or contents of the customer information 108 stored in the storage section 102 based on the information received by the communication control section 1002.

The control section 201 of the POS terminal 20 copies or decompresses the control program 210 in the storage section 202 on the RAM and operates according to the control program 210 to generate functional components shown in Fig. 5 on the RAM. Specifically, the control section 201 of the POS terminal 20 includes a near field wireless communication control section 2001, a commodity registration section 2002, a checkout processing section 2003, a customer information determination section 2004, a receipt issuing section 2005, an official receipt issuing section 2006 and a display control section 2007.

The near field wireless communication control section 2001 is an example of a receiving module. The near field wireless communication control section 2001 controls the near field wireless communication interface 204 to perform the near field wireless communication. For example, the near field wireless communication control section 2001 controls the near field wireless communication interface 204 to receive the customer information 108.

The commodity registration section 2002 performs the commodity registration processing for registering a commodity to be purchased. For example, the commodity registration section 2002 registers a commodity identified by the commodity code scanned by the scanner 207 or a commodity identified by the commodity code received through the operation section 206 as the commodity to be purchased.

The checkout processing section 2003 performs a checkout processing on the commodity registered by the commodity registration section 2002. For example, the checkout processing section 2003 calculates a total amount of the commodity registered by the commodity registration section 2002. The checkout processing section 2003 further calculates a change for a deposit amount from the customer.

The customer information determination section 2004 determines whether or not the request contained in the customer information 108 received by the near field wireless communication control section 2001 is realized. More specifically, when the near field wireless communication control section 2001 receives the customer information 108, the customer information determination section 2004 determines whether or not the request information including the store code for identifying the retail store in which the POS terminal 20 is installed is included in the customer information 108.

The customer information determination section 2004 determines whether or not the realization condition included in the request information is satisfied if the request information described above is included in the customer information 108. The customer information determination section 2004 instructs each functional section to handle the request if the realization condition is satisfied. On the other hand, the customer information determination section 2004 does not instruct each functional section to handle the request if the realization condition is not satisfied.

For example, the customer information determination section 2004 determines whether or not the amount needed if the customer wants the shopping bag in the retail store is equal to or greater than that set in the realization condition, if the amount needed if the customer wants the shopping bag is set in the realization condition and a notification in which the shopping bag is not needed is set in the request content. The customer information determination section 2004 instructs the display control section 2007 to display that the shopping bag is not needed if the amount needed if the customer wants the shopping bag in the retail store is equal to or greater than that set in the realization condition.

For example, the customer information determination section 2004 determines whether or not a quantity of purchased commodity is equal to or smaller than that set in the realization condition, if a quantity of purchased commodity is set in the realization condition and a notification in which the shopping bag is not needed is set in the request content. Then, the customer information determination section 2004 instructs the display control section 2007 to display that the shopping bag is not needed if the quantity of purchased commodity is equal to or smaller than that set in the realization condition.

For example, the customer information determination section 2004 determines whether or not an accumulated value of the point is equal to or greater than that set in the realization condition, if the point value given corresponding to the shopping is set in the realization condition and a notification in which the paper receipt is issued instead of the electronic receipt is set in the request content. Then, the customer information determination section 2004 instructs the receipt issuing section 2005 to issue the paper receipt instead of the electronic receipt, if the accumulated value of the point is equal to or greater than that set in the realization condition.

For example, the customer information determination section 2004 determines whether or not it is set in the realization condition that the official receipt is necessarily issued, if necessity of the official receipt is set in the realization condition and a name of a receiver, e.g., personal name or company name, is set in the request content. Then, the customer information determination section 2004 instructs the official receipt issuing section 2006 to issue the official receipt containing the name of the receiver set in the request content, if it is set in the realization condition that the issuance of the official receipt is necessary.

The receipt issuing section 2005, the official receipt issuing section 2006 and the display control section 2007 are examples of an output module. The receipt issuing section 2005, the official receipt issuing section 2006 and the display control section 2007 output the request content included in the customer information 108 received by the near field wireless communication control section 2001. More specifically, the receipt issuing section 2005, the official receipt issuing section 2006 and the display control section 2007 output the request content included in the customer information 108 by executing various kinds of processing in response to the instruction from the customer information determination section 2004. Thus, the receipt issuing section 2005, the official receipt issuing section 2006 and the display control section 2007 output the request content included in the request information having the store code of the retail store in which the POS terminal 20 is installed. Furthermore, the receipt issuing section 2005, the official receipt issuing section 2006 and the display control section 2007 output the request content if the realization condition included in the request information having the store code is satisfied.

The receipt issuing section 2005 controls the issuance of a receipt showing contents of one transaction. The receipt issuing section 2005 controls the printing section 208 to print the receipt when the receipt issuing section 2005 is instructed to issue the paper receipt by the customer information determination section 2004.

The receipt issuing section 2005 transmits transaction information indicating contents of one transaction to an electronic receipt server (not shown) that generates the electronic receipt when the receipt issuing section 2005 is instructed to issue an electronic receipt by the customer information determination section 2004. The electronic receipt server generates an electronic receipt and transmits it to the customer terminal 10. Thus, the receipt issuing section 2005 generates the electronic receipt. The electronic receipt may be generated by the receipt issuing section 2005 instead of the electronic receipt server.

In this case, the receipt issuing section 2005 controls the near field wireless communication control section 2001 to transmit the electronic receipt to the customer terminal 10.

The official receipt issuing section 2006 controls the printing section 208 to control the issuance of an official receipt. The official receipt issuing section 2006 controls the printing section 208 to issue an official receipt that the name of the receiver, e.g., personal name or company name, set in the request content is printed in a name of the receiver (issuing destination) column thereof when the official receipt issuing section 2006 is instructed to issue the official receipt by the customer information determination section 2004.

The display control section 2007 controls the display section 205 to display various kinds of information. For example, the display control section 2007 displays whether or not the shopping bag is needed on the display section 205 when the display control section 2007 is instructed by the customer information determination section 2004 to display whether or not the shopping bag is needed.

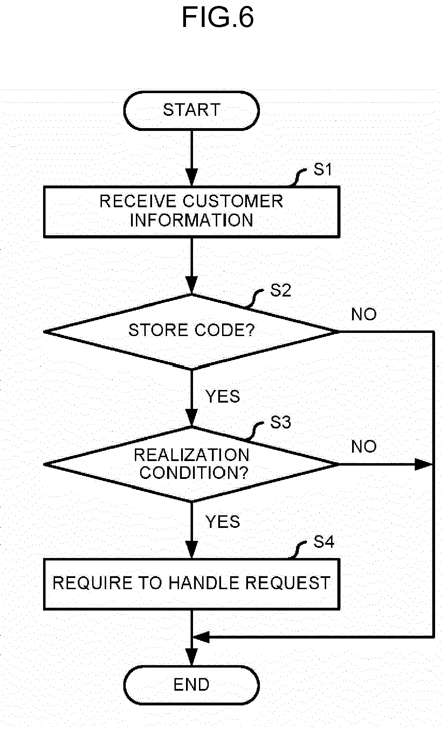

Next, the request handling processing executed by the POS terminal 20 is described. Fig. 6 is a flowchart depicting the request handling processing performed by the POS terminal 20.

The near field wireless communication control section 2001 receives the customer information 108 from the customer terminal 10 (Act S1).

The customer information determination section 2004 determines whether or not the customer information 108 received from the customer terminal 10 includes the request information having the store code for identifying the retail store in which the POS terminal 20 is installed (Act S2).

The POS terminal 20 terminates the request handling processing if the request information having the store code for identifying the retail store in which the POS terminal 20 is installed is not included in the customer information 108 (No in Act S2).

If the request information having the store code for identifying the retail store in which the POS terminal 20 is installed is included in the customer information 108 (Yes in Act S2), the customer information determination section 2004 determines whether or not the realization condition included in the request information is satisfied (Act S3).

If the realization condition is not satisfied (No in Act S3), the POS terminal 20 terminates the request handling processing.

If the realization condition is satisfied (Yes in Act S3), the customer information determination section 2004 instructs each functional section to handle the request associated with the realization condition (Act S4).

Then, the POS terminal 20 terminates the request handling processing.

As described above, the POS terminal 20 according to the present embodiment receives the customer information 108 containing the request of the customer from the customer terminal 10 in which the request of the customer for each retail store is stored. Then, the POS terminal 20 outputs the request of the customer contained in the customer information 108. Therefore, the POS terminal 20 according to the present embodiment can easily receive the request of the customer.

The programs executed by each device of the foregoing embodiment and the modification may be incorporated into a storage medium (ROM or storage section) of each device in advance to be provided; however, it is not limited thereto. The programs may be recorded in a computer-readable recording medium such as a CD-ROM (compact disc read-only memory), an FD (Flexible Disk), a CD-R (Compact Disk Recordable), a DVD (Digital Versatile Disk) and the like in the form of installable or executable file to be provided. Further, the storage medium is not limited to a medium independent from a computer or an embedded system, and may also be a storage medium that stores or temporarily stores the programs by downloading the programs transmitted through a LAN (Local Area Network) or an Internet.

Further, the programs executed by each device of the foregoing embodiment and the modification may be provided by being stored in a computer connected with a network such as the Internet and downloaded via the network or may be provided or distributed via the network such as the Internet.

While certain embodiments of the present invention have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. A sales data processing apparatus, comprising:
a receiving module configured to receive customer information including a request of a customer from a portable terminal, carried by the customer, in which the request of the customer is stored; and
an output module configured to output contents indicated by the request of the customer included in the customer information received by the receiving module.

2. The sales data processing apparatus according to claim 1, wherein
the receiving module is configured to receive the customer information in which the request of the customer is set in association with a store code for identifying a retail store, and
the output module is configured to output contents of the request of the customer associated with the store code of the retail store in which the sales data processing apparatus is installed.

3. The sales data processing apparatus according to claim 1 or 2, wherein
the receiving module is configured to receive the customer information including the request of the customer and a realization condition for the request, and
the output module is configured to output contents of the request if the realization condition included in the customer information received by the receiving module is satisfied.

4. The sales data processing apparatus according to claim 3, wherein
the receiving module is configured to receive the customer information in which an amount needed if a shopping bag is required is set as the realization condition, and
the output module is configured to perform control to display whether or not the shopping bag is required depending on whether the amount needed if a shopping bag is required in a retail store satisfies the realization condition.

5. The sales data processing apparatus according to claim 3 or 4, wherein
the receiving module is configured to receive the customer information in which a point value given corresponding to a shopping is set as the realization condition, and
the output module is configured to issue a paper receipt instead of an electronic receipt by switching from the electronic receipt to the paper receipt depending on whether an accumulated value of the point satisfies the realization condition.

6. A method for outputting a request of a customer by a sales data processing apparatus, comprising:
receiving customer information including the request of the customer from a portable terminal, carried by the customer, in which the request of the customer is stored; and
outputting contents of the request of the customer included in the customer information received.

7. The method according to claim 6, further comprising:
receiving the customer information in which the request of the customer is set in association with a store code for identifying a retail store, and
outputting contents of the request of the customer associated with the store code of the retail store in which the sales data processing apparatus is installed.

8. The method according to claim 6 or 7, further comprising:
receiving the customer information including the request of the customer and a realization condition for the request, and
outputting contents of the request if the realization condition included in the customer information received by the receiving module is satisfied.

9. The method according to claim 8, further comprising:
receiving the customer information in which an amount needed if a shopping bag is required is set as the realization condition, and
performing control to display whether or not the shopping bag is required depending on whether the amount needed if a shopping bag is required in a retail store satisfies the realization condition.

10. The method according to claim 8 or 9, further comprising:
receiving the customer information in which a point value given corresponding to a shopping is set as the realization condition, and
issuing a paper receipt instead of an electronic receipt by switching from the electronic receipt to the paper receipt depending on whether an accumulated value of the point satisfies the realization condition.

11. A non-transitory computer readable medium storing a program causing a computer to execute the method according to claim 6 to 10.
